# EUROPÄISCHE PATENTSCHRIFT

(11) **EP 2 354 333 B1**
(45) Veröffentlichungstag und Bekanntmachung des Hinweises auf die Patenterteilung: **16.07.2014**
(21) Anmeldenummer: 10015939.1
(22) Anmeldetag: 22.12.2010
(51) Int. Cl.: F16L 59/16, F16L 5/10, F16L 37/084, E03C 1/042

(54) **Rohrmuffe mit Rosette, insbesondere für Warmwasserbehälter**
Pipe sleeve with rosette, in particular for hot water container
Manchon tubulaire doté d'une rosette, notamment pour réservoir d'eau chaude

(30) Priorität: 13.01.2010 DE 202010000842 U
(43) Veröffentlichungstag der Anmeldung: 10.08.2011
(73) Patentinhaber: Buhmann, Günter, 6071 Hard (AT)
(72) Erfinder: Buhmann, Günter, 6071 Hard (AT)
(74) Vertreter: Riebling, Peter

(56) Entgegenhaltungen:
- DE-U- 1 931 389
- US-A- 1 080 520
- US-A- 3 823 964
- US-A- 4 580 816
- US-A- 5 918 914
- US-A1- 2006 010 595

## Beschreibung

Die vorliegende Erfindung betrifft eine Rohrmuffe mit Rosette, insbesondere für Warmwasserbehälter, nach dem Oberbegriff des Patentanspruchs 1 oder 3.

Rosetten sind aus dem Stand der Technik bereits zahlreich bekannt und dienen dazu, insbesondere ein warmes oder heißes Fluid enthaltene, mit einer äußeren elastischen Isolationsschicht versehene Behälter, insbesondere Warmwasser erzeugende und/oder Warmwasser speichernde Behälter (z.B. Boiler; Speicherkessel) mit externen Warm- oder Kaltwasser führenden Rohrleitungen über Rohrmuffen wasserdicht und wärmegedämmt zu verbinden.

Hierbei wird die Rohrmuffe aus Stahl mit ihrem behälternahen Ende auf dem Warmwasserbehälter aufgeschweißt oder wasserdicht aufgeschraubt, wobei auf das behälterferne Ende der Rohrmuffe das Warm- oder Kaltwasser führende Rohr aus Stahl wasserdicht aufgeschraubt wird. Auf dem Außenmantel des behälterfernen Endes der Rohrmuffe ist dann die Rosette aus Kunststoff aufgeschoben und liegt mit ihrem äußeren Ringwulst an der Isolationsschicht des Warmwasserbehälters axial auf. Um eine Anpassung des Innendurchmessers der Rosette an unterschiedliche Außendurchmesser der Rohrmuffe zu erreichen, ist der Innenmantel der Rosette mit 3 gleichmäßig verteilten axial sich erstreckenden und keilförmig sich vom Ringwulst aus radial nach innen vergrößernden Auflaufkeilen versehen. Damit kann ein einziger Typ von Rosette für eine Vielzahl von Rohrmuffen mit unterschiedlichen Außendurchmessern verwendet werden, was zu einer Verbilligung der Rosette führt, jedoch mit schwerwiegenden Nachteilen in der Wärmeabdichtung der Rosette zur Rohrmuffe. Weiterhin kann die Rosette nahezu beliebig weit axial auf die Rohrmuffe aufgeschoben werden, da sich die Rosette aus Kunststoff radial nach außen aufweiten kann, was dazu führt, dass die wärmeabdichtende Anlage des Ringwulst zur elastischen Isolationsschicht des Warmwasserbehälters mit unterschiedlichen und undefinierten Vorspannungen der elastischen Isolationsschicht erfolgt und damit die Wärmeabdichtung über die Zeit nicht zuverlässig beibehalten bleibt.

Nachteil dieser bekannten Rosetten ist daher, dass diese keine optimale Wärmeabdichtung zum Warmwasserbehälter aufweisen, da sie zum einen auf dem Außenmantel der Rohrmuffe und zum anderen an dem Außenmantel der Isolationsschicht des Warmwasserbehälters nicht oder nicht zuverlässig dauerhaft satt aufliegen.

Die US 2006/010595 A1 offenbart den Oberbegriff von Anspruch 1 und zeigt einen Kunststoffkragen zum Abdichten des Bereiches zwischen einem Rohr und einer Wandöffnung, wobei der Kunststoffkragen eine ringförmige konische Fläche mit einer mittigen Öffnung aufweist. In dieser Öffnung ist eine sich verjüngende Kante zur Abdichtung gegen die Wand und eine ringförmige Rippe angeordnet, welche einer Verformung des Kunststoffkragens entgegenwirkt. Nachteilig an dieser Ausführung ist, dass der Kunststoffkragen lediglich auf das Rohr aufgeschoben wird und keinerlei Abziehsicherung vorhanden ist, die ein ungewolltes lösen der Verbindung verhindert.

Die DE 19 31 389 U zeigt eine Schubrosette für sanitäre Armaturen mit einem Klemmring, der sich lippendichtungsartig auf den Außenumfang eines durch das Rosettenloch geführte Rohr legt. Nachteilig an dieser Ausführung ist, dass keine geeignete Abziehsicherung vorhanden ist, welche einer Verschiebung des Rohr entgegenwirkt.

Aufgabe der vorliegenden Erfindung ist es daher, eine gattungsgemäße Rohrmuffe mit Rosette, insbesondere für Warmwasserbehälter, derart weiter zu bilden, dass die Wärmeabdichtung eines Wasserrohres zwischen Warmwasserbehälter und Außenraum wesentlich verbessert ist, bzw. allgemein dass die Wärmeabdichtung eines Fluidrohres zwischen zwei Räumen mit unterschiedlichen Temperaturen wesentlich verbessert ist.

Der Begriff "Wärmeabdichtung" bedeutet in diesem Zusammenhang, dass der Luft-bzw. Gasaustausch, d.h. die Wärmekonvektion, sowie die Wärmestrahlung zwischen Warmwasserbehälter und Umgebung verhindert oder zumindest wesentlich verringert wird.

Zur Lösung der gestellten Aufgabe dienen die Merkmale des unabhängigen Patentanspruches 1 oder 3.

Vorteilhafte Weiterbildungen sind Gegenstand der abhängigen Ansprüche.

Vorteil dabei ist, dass damit eine dauerhafte Wärmedämmung mit hohem Wirkungsgrad zwischen Warmwasserbehälter und Umgebung erzielt werden kann bzw. zwischen Rosette und Rohrmuffe sowie Isolationsschicht des Warmwasserbehälters.

Weiterer Vorteil ist, dass bei einer formschlüssigen axialen Abziehsicherung eine klar definierte Aufstecktiefe zwischen Rohrmuffe und Rosette ermöglicht ist und damit eine klar definierte Vorspannung der elastischen Isolationsschicht des Warmwasserbehälters.

Erfindungsgemäß ist die axiale Abziehsicherung als Rastverbindung zwischen der Rosette und der Rohrmuffe ausgebildet, wobei bevorzugt ein ringsum laufender Ringbund in eine hierzu passende ringsum laufende Ringnut axial rastend einschnappt. Diese Rastverbindung kann dann auch gleichzeitig die vollumfängliche Wärmeabdichtung darstellen, da Ringnut und Ringbund über den vollen Umfang aneinander anliegen.

Erfindungsgemäß wird als axiale Abziehsicherung, wenn auf dem Innenmantel der Rosette ein ringsum laufender Ringbund und auf dem Aussenmantel der Rohrmuffe eine ringsum laufende Ringnut vorgesehen sind, die ineinander rastend einschnappen, wobei gleichzeitig diese Rastverbindung als Wärmedämmung dient, da Ringnut und Ringbund über den vollen Umfang aneinander anliegen. Aber die umgekehrte Anordnung ist auch durch die vorliegende Erfindung geschützt sein, dass also auf dem Innenmantel der Rosette eine ringsum laufende Ringnut und auf dem Aussenmantel der Rohrmuffe ein ringsum laufender Ringbund vorgesehen sind, die ineinander rastend einschnappen und über den vollen Umfang wärmedichtend aneinander anliegen.

Als Rastverbindung kann die Ringnut oder der Ringbund in der Rohrmuffe natürlich auch an der behälternahen oder behälterfernen Stirnseite der Rohrmuffe gebildet sein, zwischen dieser und einem Anschlussrohrstück.

Der Ringbund und auch die Ringnut können einstückig in dem Material der Rosette bzw. der Rohrmuffe vorhanden sein oder aber durch ein separates Bauelement, z.B. ein auf- oder eingeschobener Ring, dort angebracht sein.

Auch könnte die Rastverbindung durch einen separaten Ringbund erfolgen, der, nachfolgend zur Rosette, auf die Rohrmuffe axial aufgeschoben wird und in eine zugehörige ringsumlaufende Ringnut in der Rohrmuffe einrastet, wobei das Schieben soweit erfolgt, bis die elastische Isolierung des Warmwasserbehälters eine genügende Vorspannung hat und dazwischen eine geeignete Wärmeisolierung erzeugt worden ist. Die Rosette wird dann durch den separaten Ringbund formschlüssig auf der Rohrmuffe gehalten und der separate Ringbund wird durch die Ringnut formschlüssig auf der Rohrmuffe gehalten.

Anstatt als Rastverbindung kann nicht erfindungsgemäß, die axiale Abziehsicherung auch als reiner formschlüssiger Anschlag zwischen einem separaten Ringbund auf der Rohrmuffe und der behälterfernen Stirnseite der Rosette ausgebildet sein. Hierzu wird zunächst die Rosette auf die Rohrmuffe axial aufgeschoben, dann wird ein als separates Bauteil ausgebildeter Ringbund auf die Rohrmuffe axial aufgeschoben bis die Ringwulst der Rosette genügend die elastische Isolierung des Warmwasserbehälter deformiert hat und somit vorgespannt hat und dazwischen eine geeignete Wärmeisolierung erzeugt worden ist. Die Rosette wird dann durch den separaten Ringbund formschlüssig auf der Rohrmuffe gehalten, der separate Ringbund hingegen wird durch reinen Reibschluss auf der Rohrmuffe gehalten.

Die Rosette ist insbesondere aus Kunststoffmaterial ausgebildet und die Rohrmuffe aus einem für die Wasserführung geeigneten Metallmaterial, z.B. Stahl. Es können aber auch Rosette und Rohrmuffe aus Kunststoff oder aus Metall oder einer Kombination davon sein.

Folgende oben und neu genannte Merkmale und Vorteile hat die vorliegende Erfindung:
1. Kraft- und/oder Formschluss durch die Dichtlippe (Ringbund);
2. Unterdrückung der Wärmezirkulation durch minimalen Spalt zur Muffe;
3. Unterdrückung der Wärmezirkulation am Aussenmantel durch Vorspannung der Aussenkontur der Isolation des Warmwasserbehälters;
4. Kein Eindringen von Tropfwasser (Kondenswasser) zwischen Warmwasserbehälter und seiner Isolationsschicht wegen der Dichtlippe (Ringbund);
5. Rosette kann aus nachwachsendem Bio-Kunststoff, z.B. Polymerkunststoff aus Holzabfall, hergestellt werden und ist damit C02 neutral;
6. Materialersparnis durch radialen Wellenschnitt des Rohrteils der Rosette;
7. Kunststoff der Rosette ist in der Farbgebung frei wählbar;
8. Der Typ des Kunststoffs ist auf der Rosette nach Vorschrift aufgebracht;
9. Die Innendurchmesser des Rohrteils der Rosette sind frei wählbar, insbesondere aber in D27, D34, D40, D48 und D54 (jeweils mm im Durchmesser)

Natürlich könnte die erfindungsgemäße Rohrmuffe mit Rosette auch für andere Zwecke als bei Warmwasserbehältern eingesetzt werden, z.B. bei dem Anschluss von Rohrleitungen in Häusern im Bereich von Siphonen an Waschbecken, Wachmaschinen, Trocknern etc., wobei hier die Rosette eine Wärmedämmung einer Rohrleitung durch ein Mauerwerk (oder allgemein einer Wand) zwischen einem beheizten Innenraum und einem unbeheizten Raum bzw. der Außenwelt erzielen soll. Auch wäre eine Anwendung der erfindungsgemäßen Rohrmuffe bei ein Kältefluid führenden Kühl- und Gefriergeräten denkbar.

Allgemein soll also die erfindungsgemäße Rohrmuffe mit Rosette eine optimale Wärmeabdichtung einer fluidführenden (Gas, Flüssigkeit, Gel, oder auch festes Schüttgut) Rohrleitung zwischen einem ersten Raum mit höherer Temperatur und einem zweiten Raum mit niedrigerer Temperatur erreichen. Dabei weist das Fluid selbst insbesondere eine höhere Temperatur auf, als der zweite Raum mit der niedrigeren Temperatur - dies ist aber nicht zwingend nötig, so dass auch ein gleich kaltes oder gar kälteres Fluid durch die Rohrleitung mit der erfindungsgemäßen Rohrmuffe mit Rosette gefördert werden könnte.

Im Folgenden wird die Erfindung durch beispielhafte Zeichnungen näher erläutert.

Es zeigt:
Figur 1: perspektivische Ansicht der erfindungsgemäßen Rohrmuffe mit aufgeschobener Rosette;
Figur 2: Radiale Ansicht auf Figur 1;
Figur 3: Längsschnitt durch Figur 2;
Figur 4: Vergrößertes Detail der Figur 3 im Bereich der Verbindung zwischen Rohrmuffe und Rosette;
Figur 5: Radiale Ansicht der Rohrmuffe allein;
Figur 6: Vergrößertes Detail der Figur 5 im Bereich der Ringnut auf dem Aussenmantel der Rohrmuffe;
Figur 7: Radiale Ansicht der Rosette allein im Längsschnitt;
Figur 8: Vergrößertes Detail der Figur 7 im Bereich des Ringbundes auf dem Innenmantel der Rosette.

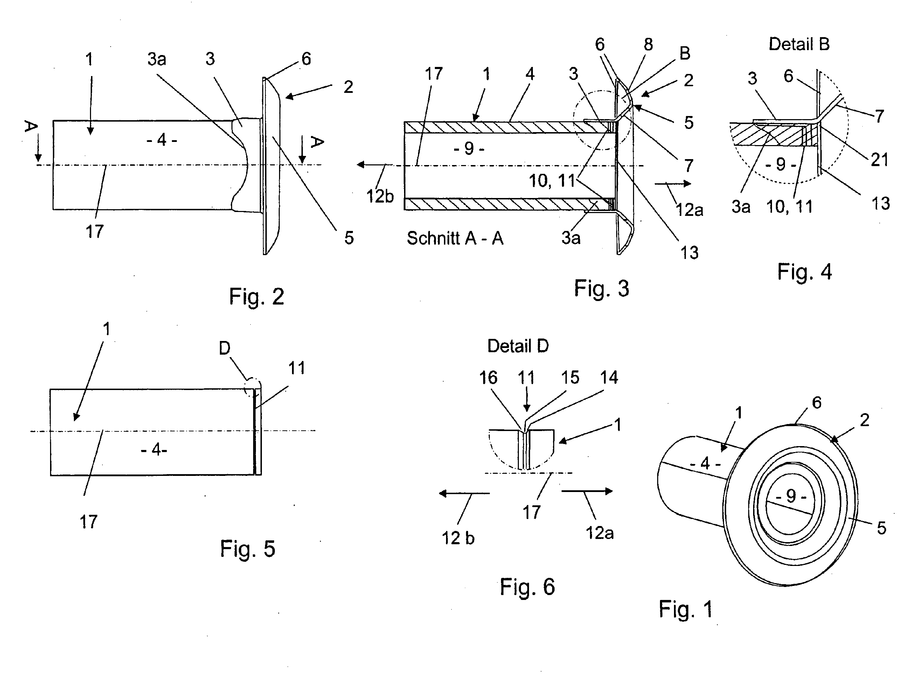

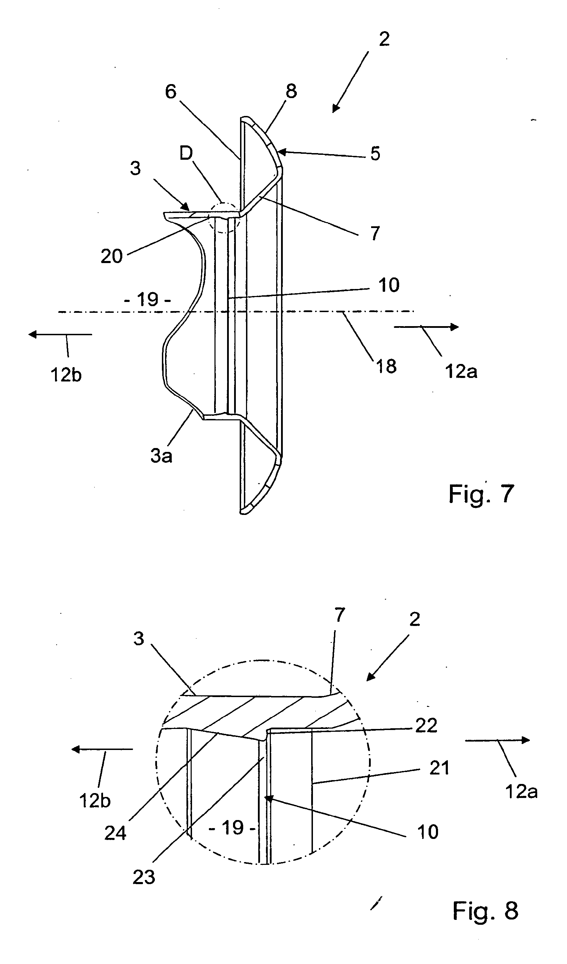

Figuren 1-6 zeigen die erfindungsgemäße Rohrmuffe mit Rosette im Zusammenbauzustand, die Figuren 7 und 8 hingegen nur die erfindungsgemäße Rosette im nicht montierten Zustand.

In Figur 1 und 2 ist gezeigt, dass die erfindungsgemäße Rosette 2 mit ihrem Hülsenteil 3 auf dem Aussenmantel 4 der Rohrmuffe 1 randseitig aufgeschoben ist, wobei sich an das zylindrische Hülsenteil 3 der Rosette 2 ein Trichter 5 anschließt, der einen in Richtung auf die Rohrmuffe 1 und nach radial außen gerichteten Dichtrand 6 aufweist. Dieser Dichtrand 6 legt sich in Einbaustellung der Rohrmuffe 1 mit Rosette 2 dann satt wärmeabdichtend an die dadurch elastisch leicht verformte Isolationsschicht eines Warmwasserbehälters (nicht gezeigt) an. Der innere stirnseitige Rand 3a des zylindrischen Hülsenteils 3 der Rosette 2 ist im Übrigen aus Gründen der Materialersparnis mehrfach gewellt ausgebildet.

Figur 3 zeigt einen Längsschnitt durch die Figur 2, Figur 4 eine Vergrößerung der Verbindungsstelle zwischen Rohrmuffe 1 und Rosette 2, wobei erkennbar ist, dass der Trichter 5 der Rosette 2 aus einem an das zylindrische Hülsenteil 3 angrenzende radial inneren Konusteil 7 besteht, an das sich wiederum ein radial äußeres Ringbogenteil 8 anschließt, welches in den randseitigen radial äußeren über den vollen Umfang umlaufenden Dichtrand 6 mündet. Die Rohrmuffe 1 besitzt einen Innenraum 9, durch welchen das Fluid, z.B. Warmwasser im Betriebszustand hindurch fließt. Zwischen dem zylindrischen Hülsenteil 3 und dem Konusteil 7 der Rosette 2 ist nun ein ringsum laufender Ringbund 10 vorgesehen, der vom Innenmantel der Rosette 2 radial nach innen in Richtung Innenraum der Rosette 2 weist und in die randseitige, ringsum laufende Ringnut 11 auf dem Aussenmantel 4 rastend und wärmeabdichtend ggfs. mittels Presssitzpassung eingreift und damit die Rosette 2 von einem axialen Abziehen in Abzugsrichtung 12a von der Isolationsschicht des Warmwasserbehälters weg und in Aufsteckrichtung 12b auf die Isolationsschicht des Warmwasserbehälters hin in ihrer Position sichert. Die rosettenseitige Stirnseite 13 der Rohrmuffe 1 schließt etwa mit dem Übergang 21 zwischen zylindrischem Hülsenteil 3 und Konusteil 7 der Rosette 2 ab.

Figur 5 zeigt die Rohrmuffe 1 mit randseitiger, der Isolationsschicht des Warmwasserbehälters abgewandten ringsum laufenden Ringnut 11 auf ihrem Aussenmantel 4, wobei in Figur 6 diese Ringnut 11 vergrößert dargestellt ist. Diese Ringnut 11 besitzt im Wesentlichen drei Flächen, in Aufsteckrichtung 12b der Rosette 2 auf die Rohrmuffe 1 gesehen, zunächst eine steile Rampenfläche 14 mit etwa 45° Neigung, nachfolgend daran angrenzend eine relativ axial schmale Ringbundfläche 15, passend zur völligen Aufnahme des Ringbundes 10 der Rosette 2, und nachfolgend daran angrenzend dann eine flache Rampenfläche 16 mit etwa 30° Neigung aus der Längserstreckungsachse 17 der Rohrmuffe 1.

Figur 7 zeigt einen Längsschnitt der Rosette 2 durch deren Längserstreckungsachse 18, wobei die gleichen Bezugszeichen gelten, wie schon in Figur 3 in der auf der auf die Rohrmuffe 1 aufgesteckten Stellung. Mit dem Bezugszeichen 19 ist der Innenraum der Rosette 2 bezeichnet, mit 20 deren Innenmantel.

Figur 8 zeigt nun eine vergrößerte Darstellung von Figur 7, wobei die gleichen Bezugszeichen gelten, wie schon in Figur 4. Wichtig ist, dass in Aufsteckrichtung 12b gesehen der Ringbund 10 drei Flächen aufweist, nämlich in der Nähe des Trichters 5 eine steile radiale Anschlagfläche 22 mit etwa 90° Neigung, nachfolgend angrenzend eine axiale Ringbundfläche 23, die im Innendurchmesser kleiner ist, als der Innenmantel 20, wobei sich an die Ringbundfläche 23 eine Aufsteckrampenfläche 14 mit etwa 10° Neigung anschließt, welche das Aufstecken der Rosette 2 auf die Rohrmuffe 1 in Aufsteckrichtung 12b erleichtert, gleichzeitig aber die radiale Anschlagfläche 22 ein Abziehen in Abziehrichtung 12a erschwert.

### Zeichnungslegende

- 1.: Rohrmuffe
- 2.: Rosette
- 3.: zylindrisches Hülsenteil von 2; 3a welliger Stirnrand;
- 4.: Aussenmantel von 1
- 5.: Trichter von 2
- 6.: radial äußerer Dichtrand von 5
- 7.: radial inneres Konusteil von 5
- 8.: radial äußeres Ringbogenteil von 5
- 9.: Innenraum von 1
- 10.: Ringbund von 2 in 3
- 11.: Ringnut in 1
- 12.: Steckrichtungen; 12a Abzugsrichtung; 12b Aufsteckrichtung;
- 13.: Stirnseite von 1;
- 14.: steile 45°-Rampenfläche von 11
- 15.: Ringbundfläche von 11
- 16.: flache 30°-Rampenfläche von 11
- 17.: Längserstreckungsachse von 1
- 18.: Längserstreckungsachse von 2
- 19.: Innenraum von 2
- 20.: Innenmantel von 2
- 21.: Übergang zwischen 3 und 7
- 22.: steile radiale Anschlagfläche von 10
- 23.: axiale Ringbundfläche
- 24.: schräge Aufsteckrampenfläche

## Patentansprüche

1. Rohrmuffe (1) mit Rosette (2), insbesondere für Warmwasserbehälter, wobei die Rosette (2) ein rohrzylindrisches Hülsenteil (3) aufweist, an das sich ein radial nach außen erstreckender Trichter (5) anschließt, der einen radial außen liegenden, ringsum laufenden Dichtrand (6) besitzt, wobei auf dem Innenmantel (20) des rohrzylindrischen Hülsenteils (3) der Rosette (2) ein über den vollen Umfang ringsum laufender Ringbund (10) vorgesehen ist, der sich radial nach innen in den Innenraum (19) des rohrzylindrischen Hülsenteils (3) der Rosette (2) hinein erstreckt, wobei die Rosette (2) mit ihrem rohrzylindrischen Hülsenteil (3) auf der rohrzylindrischen Rohrmuffe (1) aufgeschoben ist und zwischen Rohrmuffe (1) und der Rosette (2) eine formschlüssige axiale Abziehsicherung (10, 11) vorgesehen ist und diese axiale Abziehsicherung (10, 11) über den vollen Umfang mit der Rohrmuffe (1) wärmeabdichtend in Kontakt steht, **dadurch gekennzeichnet dass** die axiale Abziehsicherung (10, 11) als Rastverbindung zwischen der Rosette (2) und der Rohrmuffe (1) ausgebildet ist und ein ringsum laufender Ringbund (10) in eine hierzu passende ringsum laufende Ringnut (11) axial rastend eingeschnappt ist, wobei der Ringbund (10) und die Ringnut (11) über den vollen Umfang axial und/oder radial wärmeabdichtend reibschlüssig und ggfs. über eine Presssitzpassung aneinander anliegen.

2. Rohrmuffe (1) mit Rosette (2) nach Anspruch 1, **dadurch gekennzeichnet, dass** als axiale Abziehsicherung (10, 11) auf dem Innenmantel (20) der Rosette (2) der ringsum laufende Ringbund (10), sowie auf dem Aussenmantel (4) der Rohrmuffe (1) die ringsum laufende Ringnut (11) vorgesehen sind, die ineinander einrastend einschnappen.

3. Rohrmuffe (1) mit Rosette (2), insbesondere für Warmwasserbehälter, wobei die Rosette (2) ein rohrzylindrisches Hülsenteil (3) aufweist, an das sich ein radial nach außen erstreckender Trichter (5) anschließt, der einen radial außen liegenden, ringsum laufenden Dichtrand (6) besitzt, wobei auf dem Innenmantel der rohrzylindrischen Rohrmuffe (1) ein über den vollen Umfang ringsum laufender Ringbund (10) vorgesehen ist, der sich radial nach innen in den Innenraum (19) des rohrzylindrischen Hülsenteils (3) der Rosette (2) hinein erstreckt, wobei die Rosette (2) mit ihrem rohrzylindrischen Hülsenteil (3) in die rohrzylindrischen Rohrmuffe (1) eingeschoben ist und zwischen Rohrmuffe (1) und der Rosette (2) eine formschlüssige axiale Abziehsicherung (10, 11) vorgesehen ist und diese axiale Abziehsicherung (10, 11) über den vollen Umfang mit der Rohrmuffe (1) wärmeabdichtend in Kontakt steht, **dadurch gekennzeichnet, dass** die axiale Abziehsicherung (10, 11) als Rastverbindung zwischen der Rosette (2) und der Rohrmuffe (1) ausgebildet ist und ein ringsum laufender Ringbund (10) in eine hierzu passende ringsum laufende Ringnut (11) axial rastend eingeschnappt ist, wobei der Ringbund (10) und die Ringnut (11) über den vollen Umfang axial und/oder radial wärmeabdichtend reibschlüssig und ggfs. über eine Presssitzpassung aneinander anliegen.

4. Rohrmuffe (1) mit Rosette (2) nach einem der Ansprüche 1 bis 3, **dadurch gekennzeichnet, dass** der Ringbund (10) und/oder die Ringnut (11) einstückig in dem Material der Rosette (2) bzw. der Rohrmuffe (1) vorhanden sind oder aber durch ein separates Bauelement, z.B. ein auf- oder eingeschobener Ring, dort angebracht sind.

5. Rohrmuffe (1) mit Rosette (2) nach Anspruch 4, **dadurch gekennzeichnet, dass** die Rastverbindung durch einen separaten Ringbund erfolgt, welcher nachfolgend zur Rosette (2) auf die Rohrmuffe (1) axial aufgeschoben ist und in eine zugehörige ringsumlaufende Ringnut in der Rohrmuffe (1) einrastet, wobei die Rosette (2) durch den separaten Ringbund formschlüssig auf der Rohrmuffe (1) gehalten wird und der separate Ringbund durch die Ringnut formschlüssig auf der Rohrmuffe (1) gehalten wird.

6. Rohrmuffe (1) mit Rosette (2) nach Anspruch 4, **dadurch gekennzeichnet, dass** die Rastverbindung durch einen separaten Ringbund erfolgt, welcher nachfolgend zur Rosette (2) auf die Rohrmuffe (1) axial aufgeschoben ist, wobei die Rosette (2) durch den separaten Ringbund formschlüssig auf der Rohrmuffe (1) gehalten wird und der separate Ringbund durch die Ringnut reibschlüssig auf der Rohrmuffe (1) gehalten wird.

7. Rohrmuffe (1) mit Rosette (2) nach einem der Ansprüche 1 bis 6, **dadurch gekennzeichnet, dass** die rosettenseitige Stirnseite (13) der Rohrmuffe (1) etwa mit einem Übergang (21) zwischen zylindrischem Hülsenteil (3) und Konusteil (7) der Rosette (2), sowie mit dem Dichtrand (6) der Rosette (2) abschließt.

## Claims

1. Pipe sleeve (1) with rosette (2), in particular for hot water containers, the rosette (2) having a tubular cylindrical sleeve part (3) adjoined by a radially outwardly extending funnel (5), which has a peripheral sealing edge (6) located radially on the outside, a peripheral annular collar (10) running over the entire periphery being provided on the internal jacket (20) of the tubular cylindrical sleeve part (3) of the rosette (2), said annular collar extending radially inwardly into the interior (19) of the tubular cylindrical sleeve part (3) of the rosette (2), the rosette (2) being pushed with its tubular cylindrical sleeve part (3) onto the tubular cylindrical pipe sleeve (1) and a form-fitting axial pull-off safety device (10, 11) being provided between the pipe sleeve (1) and the rosette (2) and this axial pull-off safety device (10, 11) being in contact in a heat-sealing manner with the pipe sleeve (1) over the entire periphery, **characterised in that** the axial pull-off safety device (10, 11) is configured as a latching connection between the rosette (2) and the pipe sleeve (1) and a peripheral collar (10) is snapped in an axially latching manner into a peripheral annular groove (11) fitting the latter, the annular collar (10) and the annular groove (11) resting on one another over the entire periphery in an axially and/or radially heat-sealing manner by frictional engagement and optionally by means of a press fit.

2. Pipe sleeve (1) with rosette (2) according to claim 1, **characterised in that**, as an axial pull-off safety device (10, 11), the peripheral annular collar (10) is provided on the inner jacket (20) of the rosette (2) and the peripheral annular groove (11) is provided on the external jacket (4) of the pipe sleeve (1) and these snap into one another in a latching manner.

3. Pipe sleeve (1) with rosette (2), in particular for hot water containers, the rosette (2) having a tubular cylindrical sleeve part (3) adjoined by a radially outwardly extending funnel (5), which has a peripheral sealing edge (6) located radially on the outside, a peripheral annular collar (10) running over the entire periphery being provided on the internal jacket of the tubular cylindrical pipe sleeve (1), said annular collar extending radially inwardly into the interior (19) of the tubular cylindrical sleeve part (3) of the rosette (2), the rosette (2) being inserted with its tubular cylindrical sleeve part (3) into the tubular cylindrical pipe sleeve (1) and a form-fitting axial pull-off securing device (10, 11) being provided between the pipe sleeve (1) and the rosette (2) and this axial pull-off securing device (10, 11) being in contact with the pipe sleeve (1) in a heat-sealing manner over the entire periphery, **characterised in that** the axial pull-off securing device (10, 11) is configured as a latching connection between the rosette (2) and the pipe sleeve (1) and a peripheral annular collar (10) is snapped in an axially latching manner into a peripheral annular groove (11) fitting the latter, the annular collar (10) and the annular groove (11) resting on one another in an axially and/or radially heat-sealing manner by frictional engagement and optionally by means of a press fit over the entire periphery.

4. Pipe sleeve (1) with rosette (2) according to any one of claims 1 to 3, **characterised in that** the annular collar (10) and/or the annular groove (11) are present in one piece in the material of the rosette (2) or the pipe sleeve (1) or else are attached there by a separate component, for example a ring that is pushed on or pushed in.

5. Pipe sleeve (1) with rosette (2) according to claim 4, **characterised in that** the latching connection takes place by means of a separate annular collar, which is axially pushed onto the pipe sleeve (1) following the rosette (2) and latches in an associated peripheral annular groove in the pipe sleeve (1), the rosette (2) being held by a form fit on the pipe sleeve (1) by the separate annular collar and the separate annular collar being held by a form fit on the pipe sleeve (1) by the annular groove.

6. Pipe sleeve (1) with rosette (2) according to claim 4, **characterised in that** the latching connection takes place by means of a separate annular collar, which is axially pushed onto the pipe sleeve (1) following the rosette (2), the rosette (2) being held by a form fit on the pipe sleeve (1) by the separate annular collar and the separate annular collar being held by frictional engagement on the pipe sleeve (1) by the annular groove.

7. Pipe sleeve (1) with rosette (2) according to any one of claims 1 to 6, **characterised in that** the end face (13) of the pipe sleeve (1) on the rosette side approximately terminates with a transition (21) between the cylindrical sleeve part (3) and cone part (7) of the rosette (2), as well as with the sealing edge (6) of the rosette (2).

## Revendications

1. Manchon tubulaire (1) doté d'une rosette (2), notamment pour des réservoirs d'eau chaude, étant précisé que la rosette (2) comporte un élément formant douille cylindrique tubulaire (3) auquel se rattache un entonnoir (5) qui s'étend radialement vers l'extérieur et qui présente un bord d'étanchéité (6) situé radialement à l'extérieur, tout autour, qu'il est prévu sur l'enveloppe intérieure (20) de l'élément formant douille cylindrique tubulaire (3) de la rosette (2) un collet annulaire (10) qui s'étend sur toute la circonférence et qui s'étend radialement vers l'intérieur jusque dans l'espace intérieur (19) de l'élément formant douille cylindrique tubulaire (3) de la rosette (2), que la rosette (2) est enfilée avec son élément formant douille cylindrique tubulaire (3) sur le manchon cylindrique tubulaire (1), et qu'il est prévu entre le manchon tubulaire (1) et la rosette (2) une protection anti-arrachement axiale par complémentarité de forme (10, 11) et que cette protection anti-arrachement axiale (10, 11) est en contact thermo-isolant avec le manchon (1) sur toute la circonférence, **caractérisé en ce que** la protection anti-arrachement axiale (10, 11) est conçue comme une liaison à encliquetage entre la rosette (2) et le manchon tubulaire (1), et un collet annulaire (10) qui fait tout le tour est encliqueté axialement dans une rainure annulaire correspondante (11) qui fait tout le tour, étant précisé que le collet annulaire (10) et la rainure annulaire (11) sont appliqués l'un contre l'autre sur toute la circonférence par friction, et éventuellement par ajustage serré, axialement et/ou radialement, avec un effet thermo-isolant.

2. Manchon tubulaire (1) doté d'une rosette (2) selon la revendication 1, **caractérisé en ce que** comme protection anti-arrachement axiale (10, 11), il est prévu sur l'enveloppe intérieure (20) de la rosette (2) le collet annulaire (10) qui fait tout le tour, et sur l'enveloppe extérieure (4) du manchon tubulaire (1) la rainure annulaire (11) qui fait tout le tour, les deux s'encliquetant l'un dans l'autre.

3. Manchon tubulaire (1) doté d'une rosette (2), notamment pour des réservoirs d'eau chaude, étant précisé que la rosette (2) comporte un élément formant douille cylindrique tubulaire (3) auquel se rattache un entonnoir (5) qui s'étend radialement vers l'extérieur et qui présente un bord d'étanchéité (6) situé radialement à l'extérieur, tout autour, qu'il est prévu sur l'enveloppe intérieure du manchon cylindrique tubulaire (1) un collet annulaire (10) qui s'étend sur toute la circonférence et qui s'étend radialement vers l'intérieur jusque dans l'espace intérieur (19) de l'élément formant douille cylindrique tubulaire (3) de la rosette (2), que la rosette (2) est glissée avec son élément formant douille cylindrique tubulaire (3) dans le manchon tubulaire cylindrique tubulaire (1), et qu'il est prévu entre le manchon tubulaire (1) et la rosette (2) une protection anti-arrachement axiale par complémentarité de forme (10, 11) et que cette protection anti-arrachement axiale (10, 11) est en contact thermo-isolant avec le manchon (1) sur toute la circonférence, **caractérisé en ce que** la protection anti-arrachement axiale (10, 11) est conçue comme une liaison à encliquetage entre la rosette (2) et le manchon tubulaire (1), et un collet annulaire (10) qui fait tout le tour est encliqueté axialement dans une rainure annulaire correspondante (11) qui fait tout le tour, étant précisé que le collet annulaire (10) et la rainure annulaire (11) sont appliqués l'un contre l'autre sur toute la circonférence par friction, et éventuellement par ajustage serré, axialement et/ou radialement, avec un effet thermo-isolant.

4. Manchon tubulaire (1) doté d'une rosette (2) selon l'une des revendications 1 à 3, **caractérisé en ce que** le collet (10) et/ou la rainure annulaire (11) sont prévus d'une seule pièce dans le matériau de la rosette (2) ou du manchon tubulaire (1), ou sont installés à cet endroit grâce à un élément de construction séparé, par exemple une bague enfilée ou insérée.

5. Manchon tubulaire (1) doté d'une rosette (2) selon la revendication 4, **caractérisé en ce que** la liaison à encliquetage se fait grâce à un collet annulaire séparé qui est enfilé axialement sur le manchon (1), après la rosette (2), et qui s'enclenche dans une rainure annulaire associée, prévue sur tout le tour dans le manchon (1), étant précisé que la rosette (2) est tenue par complémentarité de forme sur le manchon (1) grâce au collet annulaire séparé et que le collet annulaire séparé est tenu par complémentarité de forme sur le manchon (1) grâce à la rainure annulaire.

6. Manchon tubulaire (1) doté d'une rosette (2) selon la revendication 4, **caractérisé en ce que** la liaison à encliquetage se fait grâce à un collet annulaire séparé qui est enfilé axialement sur le manchon (1), après la rosette (2), étant précisé que la rosette (2) est tenue par complémentarité de forme sur le manchon (1) grâce au collet annulaire séparé et que le collet annulaire séparé est tenu par friction sur le manchon (1) grâce à la rainure annulaire.

7. Manchon tubulaire (1) doté d'une rosette (2) selon l'une des revendications 1 à 6, **caractérisé en ce que** la face frontale (13) du manchon tubulaire (1) située côté rosette se termine à peu près par une transition (21) entre l'élément formant douille cylindrique (3) et l'élément conique (7) de la rosette (2), et par le bord d'étanchéité (6) de la rosette (2) font suite à.
